# EUROPÄISCHE PATENTSCHRIFT

(11) **EP 0 850 806 B1**
(45) Veröffentlichungstag und Bekanntmachung des Hinweises auf die Patenterteilung: **08.05.2002**
(21) Anmeldenummer: 97122532.1
(22) Anmeldetag: 19.12.1997
(51) Int. Cl.: B60R 13/02

(54) **Innenausstattungsteil für Fahrzeuge und zugehöriges Herstellungsverfahren**
Trim panel for vehicles and method of producing the same
Panneau de garnissage pour véhicule et son procédé de fabrication

(30) Priorität: 23.12.1996 DE 19654246
(43) Veröffentlichungstag der Anmeldung: 01.07.1998
(73) Patentinhaber: Eldra Kunststofftechnik GmbH, 84144 Geisenhausen (DE)
(72) Erfinder: Aichner, Rudolf, 84178 Kirchberg (DE); Böckel, Hermann, 84144 Geisenhausen (DE); Friedberger, Roland, Greenville, SC 29607 (US)
(74) Vertreter: Kohlmann, Karl Friedrich, Dipl.-Ing.

(56) Entgegenhaltungen:
- DE-A- 2 917 907
- DE-A- 3 606 375
- DE-A- 4 141 113
- DE-A- 4 214 389
- US-A- 4 890 877

## Beschreibung

Die Erfindung betrifft ein Innenausstattungsteil für Fahrzeuge und ein zugehöriges Verfahren zur Herstellung von Innenausstattungsteilen. Insbesondere bezieht sich die Erfindung auf Kraftfahrzeuge, sie kann jedoch ebenso bei anderen Fahrzeugen, beispielsweise Schienenfahrzeugen oder Luftfahrzeugen, zum Einsatz kommen.

Bei Innenausstattungsteilen in Kraftfahrzeugen, beispielsweise Instrumententafeln, Mittelkonsolen oder Türverkleidungen, gibt es eine Vielzahl unterschiedlicher Materialzusammensetzungen und Herstellungsverfahren. Um den Fahrzeuginnenraum ansprechend zu gestalten, kommen auf der Sichtseite der Innenausstattungsteile verschiedenste Dekormaterialien zum Einsatz, z.B. Kunststoff-Folien, Velours, Stoff oder Kunstleder. Bei exklusiveren Innenausstattungen wird Echtleder als Dekormaterial verwendet.

Da es sich bei Echtleder um ein Naturmaterial handelt, sind bei dessen Verarbeitung andere Gesichtspunkte zu berücksichtigen als bei künstlichen Dekormaterialien. So spielt bei der Lederverarbeitung die Schrumpfungsneigung von Echtleder eine wichtige Rolle. Bisher wird Echtleder als Dekormaterial für Innenausstattungsteile mit einem starren Trägerformteil, wie etwa Instrumententafeln, unmittelbar auf die starren Trägerformteile aufgezogen. Dadurch stützt das starre Trägerformteil den darauf aufgebrachten Lederbezug. Bei diesem Materialaufbau und mit den zugehörigen bekannten Herstellungsverfahren ergibt sich eine ausreichende Haftung des Echtleders auf dem formgebenden starren Trägerteil und die direkte Abstützung des Echtleders wirkt einer Schrumpfung des Lederbezuges entgegen. Wenn man ein solches Innenausstattungsteil mit Echtlederdekor berührt, fühlt sich das Teil entsprechend hart an, abgesehen von der minimalen Nachgiebigkeit des Leders selbst.

Andererseits ist es aus der Patentschrift DE 33 36 934 C2 bekannt, im unteren Bereich eines Armaturenbretts eines Kraftfahrzeugs eine Polsterung aus einem Schaumstoffkörper vorzusehen, um so eine verletzungsmindernde Nachgiebigkeit des Armaturenbretts zu erzielen. Der Schaumstoffkörper, z.B. aus einem weich eingestellten Polyurethan, wird mit einem Bezug aus Schaumfolie, Textilstoff, Kunstleder oder Leder versehen. In der vom gleichen Anmelder stammenden Patentschrift DE 36 06 375 C2 wird ebenfalls ein Innenausstattungsteil mit einer nachgiebigen Polsterschicht beschrieben. Es wird ein Verfahren vorgeschlagen, bei dem das Innenausstattungsteil, das mit einer Kunststoff-Folie bezogen ist, nachträglich mit einem zusätzlichen Lederbezug beklebt wird, um den Fahrgastinnenraum qualitativ aufzuwerten. Bei diesen bekannten Innenausstattungsteilen wird also eine so starke Nachgiebigkeit angestrebt, daß Verletzungen, etwa bei ungewolltem Anstoßen oder unfallbedingtem Aufschlagen, vermieden werden.

Es wäre jedoch wünschenswert, bei an und für sich starren Innenausstattungsteilen, die mit einem Echtlederdekor versehen sind, etwa Instrumententafeln oder Mittelkonsolen, eine gewisse begrenzte Nachgiebigkeit des Echtlederdekors zu realisieren, da sich dadurch eine besondere Haptik, also ein besonderes Berührempfinden, für das Innenausstattungsteil ergibt, wodurch der Innenausstattung ein spezieller Charakter verliehen wird. Die Nachgiebigkeit bzw. Weichheit soll jedoch nur geringfügig sein, im Vergleich zu einer verletzungsmindernden Absorptionsfähigkeit.

Die Offenlegungsschrift DE 29 17 907 A1 beschreibt ein Verfahren zum Herstellen einer Instrumententafel, bei dem ein Flachmaterialstück, das vorzugsweise aus einem halbstarren Harz, z.B. PVC, besteht, mit einem Flachmaterialstück aus Schaumstoff verklebt wird und dieses so gebildete Laminat mittels Klebstoff mit einem Basisteil, z.B. aus ABS-Kunstharz, verbunden wird. In dieser Veröffentlichung wird auch Leder als Flachmaterialstück anstelle des halbstarren Harzes genannt, jedoch wird nicht näher auf die spezielle Problematik bei der Verarbeitung des Naturmaterials Echtleder im Vergleich zu einem Kunstmaterial, wie etwa PVC, eingegangen.

Denn zwar würde eine Hinterpolsterung von Echtleder mit Schaumstoff die Möglichkeit bieten, eine bestimmte Nachgiebigkeit beim Berühren des Dekormaterials zu erreichen, es hat sich jedoch in der Praxis gezeigt, daß sich das Echtleder durch seine Schrumpfungsneigung - etwa bei Klimawechselbeanspruchungen - besonders in konkav geformten Bereichen des Innenausstattungsteils ablöst bzw. eine wellige oder ungleichmäßige Oberflächenerscheinung ausbildet. Dieses Problem besteht auch bei den oben erwähnten verletzungsmindernden Schaumstoffpolsterungen, wenn diese mit einem Echtlederdekor bezogen sind.

Der Erfindung liegt daher das technische Problem zugrunde, ein Innenausstattungsteil für Fahrzeuge und ein zugehöriges Herstellungsverfahren zu schaffen, bei dem ein Echtlederdekor auf einem starren Formträgerteil eine gewisse begrenzte Nachgiebigkeit aufweist und trotzdem eine sichere Haftung und eine einwandfreie Oberflächenformhaltigkeit des Echtlederdekors gewährleistet ist.

Dieses technische Problem wird erfindungsgemäß von einem Innenausstattungsteil mit den Merkmalen des Patentanspruches 1 oder des nebengeordneten Patentanspruchs 3 sowie von einem Herstellungsverfahren mit den Merkmalen des Patentanspruchs 12 gelöst.

Erfindungsgemäß wurde erkannt, daß eine Hinterpolsterung von Echtleder mit einem Schaumstoffmaterial insbesondere deswegen zu den eingangs erläuterten Problemen einer Wellenoder Faltenbildung bis hin zu einer Ablösung des Lederdekors führt, weil das Schaumstoffmaterial kaum Zugbelastungen aufnehmen kann und sich aufgrund seiner porigen Struktur bei Zugbeanspruchungen unkontrolliert ausdehnen kann. Beispielsweise infolge von Klimawechselbeanspruchungen, wie sie im Inneren von Kraftfahrzeugen auftreten können, ist dann die einwandfreie Haftung und Oberflächenformhaltigkeit des Echtlederdekors nicht mehr gewährleistet.

Bei der erfindungsgemäßen Lösung werden anstelle eines porigen Schaumstoffmaterials Materialien eingesetzt, die Faden- bzw. Faserstrukturen enthalten, um mit diesen Materialien sowohl die angestrebte Haptik, d.h. eine gewisse gewünschte Weichheit, als auch die gleichzeitig erforderliche Haftung zu realisieren. Diese Faden- bzw. Faserstrukturen können neben Druck auch Zugbelastungen aufnehmen und so eine Ablösung des Lederdekors verhindern, die sonst besonders an solchen Bereichen des Innenausstattungsteils auftreten kann, die mit relativ starken konkaven Kurvenkrümmungen gestaltet sind.

Aus der gattungsgemäßen DE 41 41 113 A1 ist zwar ein großflächiges Verkleidungsteil aus thermoplastischem Kunststoff für den Kfz-Innenbereich sowie ein Verfahren zu dessen Herstellung bekannt. Bei diesem Verkleidungsteil ist aber eine Dekorschicht aus vornehmlich polyolefinisch aufgebauten Polymeren während des Formteilbildungsvorgangs aufkaschiert, die aus einem mehrlagigen Gewirke oder Gewebe mit eingewirkten Abstandhaltern aus vorzugsweise polyolefinischen Polymerfäden besteht, wobei als Dekorschicht lediglich aufgebrachte dekorative textile Oberflächen oder gedruckte oder geprägte Kunststoffolien wie auch gewebte, gewirkte Textilien oder Vliese vorgesehen sind. Ein Naturmaterial, wie Echtleder findet hier offensichtlich keine Verwendung und ist auch nicht vorgesehen. Offensichtlich zielt diese Druckschrift auf eine Werkstoffeinheitlichkeit des Gesamtaufbaus ab, und zwar durch ausschließlichen Einsatz von Komponenten auf Polymerbasis. Damit soll das beim hierin beschriebenen Stand der Technik als nachteilig empfundene Recyclingproblem gelöst werden. Auch im Falle der Variante des Abstandsgewirkes mit Beschichtung der Oberseite ist immer ein Polymermaterial vorgesehen. Die Beschichtung der Oberseite des Abstandsgewirkes soll dabei etwa eine Folie aus Polyolefinen sein, auf die eine Oberflächenstruktur aufgeprägt wird. Zusammenfassend ist also festzustellen, daß die hier vorgesehene Deckschicht des Abstandsgewirkes zur Sichtseite hin dekorativ abzuschließen ist, entweder durch eine Prägefolie oder durch eine dekorative textile Wirkung. Dabei ist immer die Materialeinheitlichkeit übergeordneter Gesichtspunkt. Die bei der Verwendung von Naturmaterialien, wie Echtleder auftretende Problematik ist bei diesen Materialien nicht zu berücksichtigen und tritt auch nicht auf.

In der DE 42 14 389 A1 ist zwar auch ein Schichtaufbau einer Dekor- bzw. Oberflächenschicht, einer sich daran anschließenden druckweichen Abstandsschicht und gegebenenfalls einer damit verbundenen Trägerschicht beschrieben, jedoch wird auch bei dieser vorbekannten Lösung - ähnlich wie bei der zuvor erläuterten DE 41 41 113 A1 - auf einen werkstoffeinheitlichen recyclefähigen Produktaufbau abgestellt. Die drei Schichten sollen daher jeweils aus einem gleichen oder gleichartigen Kunststoff bestehen oder diesen enthalten. Weiterhin ist eine kleberfreie Verbindung der einzelnen Schichten untereinander vorgesehen. Der Einsatz von zusätzlichen Klebemitteln wird hier als nachteilig empfunden.

Schließlich ist in der DE 195 45 596 A1 ein Innenverkleidungs- und/oder Sitzbezugstoff für Fahrzeuge beschriebenen, der aus aus einem mehrschichtigen Flächengebilde mit einer textilen Unterware, einer Oberware und einer Faserflorschicht besteht. Die Unterware ist eine feinmaschige Maschenware mit eingebundenen, durch Aufrauhen zerrissenen Polschlingen aus einem Spinnfaser- oder Multifilamentgarn mit einer Vielzahl von Einzelfasern, dessen gerauhter Pol eine Posterungsschicht in Form einer gerauhten Flordecke bildet. Das durch die vorliegende Anmeldung zu lösende technische Problem, an sich starre Innenausstattungsteile, die mit einem Echtlederdekor zu versehen sind, eine spezielle Nachgiebigkeit bzw. Weichheit zu verleihen, die nur geringfügig sein soll im Vergleich zu einer verletzungsmindernden Absorptionsfähigkeit, tritt hier somit gar nicht auf. Ohne starres Trägerformteil gäbe es auch keine Ablösungsproblematik bei einem Echtlederdekor, da ja der gesamte Schichtaufbau nachgiebig wäre, wie beispielsweise bei einem Fahrzeugsitzbezug. Außerdem ist die Lösung der Einbindung von Polfäden aus Faserstoffen in die Unterware nicht mit einem Abstandsgewirke im Sinne der vorliegenden Anmeldung vergleichbar, da dieses aus zwei textilen Deckflächen besteht , die mit einem Abstand voneinander durch ein Fadensystem verbunden sind, wohingegen die bekannte Flordecke durch einen Aufrauhvorgang einer Verdichtung unterworfen wird.

Bei der ersten Lösungsvariante der Erfindung, wie sie im Patentanspruch 1 angegeben ist, ist ein starres Trägerformteil, eine darauf angeordnete Schicht aus einem Abstandsgewirke und eine auf dem Abstandsgewirke angeordnete Schicht aus Echtleder vorgesehen, wobei zwischen Trägerformteil und Abstandsgewirke eine erste Kleberschicht und zwischen Abstandsgewirke und Echtlederschicht eine zweite Kleberschicht vorgesehen ist. Durch diesen Schichtverbundaufbau wird ein Innenausstattungsteil mit einer gewissen Nachgiebigkeit bzw. Weichheit auf der Dekorseite geschaffen, bei dem eine einwandfreie Haftung der Echtlederschicht auch bei starken Klimawechselbeanspruchungen und auch an stärker gekrümmten Bauteilabschnitten sichergestellt ist.

Ein Abstandsgewirke weist zwei textile Deckflächen auf, die durch ein Fadensystem miteinander verbunden sind, und zwar im Abstand voneinander. Das Abstandsgewirke realisiert den gewünschten Polstereffekt. Durch die textilen Deckflächen wird jeweils eine besonders gute Haftung zwischen der Echtlederschicht und dem Abstandsgewirke und zwischen dem Trägerformteil und dem Abstandsgewirke realisiert, da durchgängige stabile Kontaktflächen vorliegen und keine offenporigen Kontakte wie bei Schaumstoff. Weiterhin verhindern die textilen Deckflächen wirkungsvoll das Eindringen von Kleber aus der ersten und der zweiten Kleberschicht in das Innere des Abstandsgewirkes. Denn ein Eindringen von Kleber in das Innere der Schicht zwischen dem Echtlederdekor und dem Trägerformteil würde diese Schicht nach dem Aushärten des Klebers vor allem bei Klimawechselbeanspruchungen verhärten, so daß die gewünschte Nachgiebigkeit zwischen dem Echtleder und dem Trägerformteil verloren ginge. So hingegen bleibt der Kleber auf den Klebeoberflächen für die Verklebung erhalten. Dagegen kann durch die offenporige Struktur eines Schaumstoffmaterials Kleber ungehindert eindringen.

Der doppelflächige Aufbau des Abstandsgewirkes erlaubt es zudem, die Deckflächen in Schubrichtung relativ gegeneinander zu verschieben. Dadurch ergibt sich zum einen ein besonderes Berührempfinden des Lederdekors, etwa vergleichbar der menschlichen Haut, die ebenfalls in Schubrichtung verschiebbar ist. Zum anderen kann das Abstandsgewirke Relativbewegungen zwischen dem Echtleder und dem Trägerformteil ausgleichen und so schrumpfungsbedingte Ablösungen des Leders verhindern. Ferner bietet der flächige Kontakt zwischen textiler Deckfläche und Echtlederschicht eine gute Stützung des Leders gegen dessen Schrumpfungsneigung. Das Fadensystem zwischen den textilen Deckflächen verbindet die Deckflächen miteinander und hält sie gleichzeitig auf Abstand. Das Fadensystem, das z.B. aus einem Kunstfaser-Monofilgarn gebildet sein kann, nimmt Zugbelastungen auf und stellt so die Haftung des Echtlederdekors sicher. Außerdem hat das Fadensystem eine dauerhafte Rückstellelastizität, die zum einen die angestrebte Nachgiebigkeit mit sich bringt, wenn man auf das Echtlederdekor drückt, und die zum anderen stets eine Rückstellung des Echtlederdekors in den Ursprungszustand bewirkt.

Bei der zweiten Lösungsvariante der Erfindung, wie sie im nebengeordneten Patentanspruch 3 angegeben ist, ist ein Faservlies anstelle des textilen Abstandsgewirkes vorgesehen. Bei einem Faservlies handelt es sich um ein Flächengebilde aus Textilfasern, dessen Zusammenhalt durch die den Fasern eigene oder durch Präparation erzielte Haftung gegeben ist. Bei dieser Lösungsvariante können die Fasern neben Druck auch Zugbelastungen aufnehmen, im Gegensatz zu einem Schaumstoffmaterial. Auch ein Faservlies weist eine gewisse Schubelastizität auf, die Relativbewegungen zwischen der Echtlederschicht und dem starren Trägerformteil ausgleichen kann. Der erfindungsgemäße Schichtverbundaufbau mit einer Faservliesschicht ergibt eine schubweiche Haptik und eine sichere Haftung des Echtleders.

In einer zweckmäßigen Ausführungsform dieser zweiten Lösungsvariante weist das Faservlies zwei miteinander vernadelte Faservliesschichten auf. Durch diesen Zweischichtaufbau läßt sich die Schubelastizität der Polsterschicht optimieren.

Nachfolgend werden Ausführungsformen der beiden vorangehend erläuterten Lösunqsvarianten der Erfindung beschrieben.

Bei der erfindungsgemäß vorgesehenen Schicht aus einem Abstandsgewirke oder Faservlies läßt sich - im Gegensatz zu einem Schaumstoffmaterial - mit einer geringen Schichtdicke eine gute Haptik erzielen. Es ist günstig, wenn die Schicht aus einem Abstandsgewirke oder Faservlies eine Dicke im Bereich von 1-6 mm aufweist. Vorzugsweise liegt die Dicke dieser Schicht im Bereich von 2-4 mm.

Bei dem Kleber für die erste Kleberschicht zwischen Trägerformteil und Abstandsgewirke bzw. Faservlies kann ein Standardkleber eingesetzt werden, der vorzugsweise wärmeaktivierbar ist. Die zweite Kleberschicht zwischen Echtleder und Abstandsgewirke bzw. Faservlies kann ebenfalls mit verschiedenen Klebern realisiert werden, vorzugsweise einem Zweikomponenten-Polyurethan-Kleber oder einem Schmelzkleber. Das Echtleder, aus dem die Dekorschicht hergestellt wird, ist vorzugsweise ein schrumpfoptimiertes Leder. Das starre Trägerformteil kann ein Formteil aus Blech, Duroplast, Thermoplast, Verbundwerkstoffen usw. sein. Bevorzugt ist wegen seiner geringen Verzugsneigung ein Trägerformteil aus faserverstärktem Polyurethan, wobei die Faserverstärkung z.B. aus Glasfasern oder Naturfasern bestehen kann. Ein verzugsarmes Trägerformteil trägt zur Stabilität und Beständigkeit des gesamten Schichtaufbaus mit Echtlederdekor bei.

Insbesondere bei der Variante mit einem Faservlies kann es zweckmäßig sein, zwischen den Kleberschichten und der polsternden Zwischenschicht an sich bekannte Sperrbeschichtungen vorzusehen, um ein Eindringen von Kleber in die polsternde Zwischenschicht zu minimieren. Zudem kann es zweckmäßig sein, eine Sperrbeschichtung zwischen der Echtlederschicht und der zugehörigen Kleberschicht vorzusehen, um auch ein Eindringen von Kleber in das Leder zu minimieren.

Das erfindungsgemäße Verfahren zur Herstellung eines Innenausstattungsteils sieht vor, zunächst einen Schichtverbund durch Verkleben der Rückseite eines Zuschnitts aus Echtleder mit einer Oberfläche eines Flächenzuschnitts aus Abstandsgewirke oder Faservlies herzustellen. In einem zweiten Schritt wird dann der Schichtverbund auf eine Oberfläche eines separat hergestellten Trägerformteils aufgeklebt. Vorzugsweise wird das Echtleder durch zumindest einen von mehreren möglichen Verfahrensschritten zur Schrumpfoptimierung, z.B.durch Wärmebehandlung, schrumpfoptimiert, bevor der Schichtverbund gebildet wird.

Durch die Erfindung erhält man ein Innenausstattungsteil mit einem Echtlederdekor, das eine besondere schubweiche Haptik aufweist. Dabei werden Ablösetendenzen, die sich aus der Schrumpfungsneigung des Naturmaterials Leder ergeben, durch den erfindungsgemäßen Schichtaufbau wirksam unterbunden, so daß bei dem Innenausstattungsteil eine dauerhafte Haftung und Formbeständigkeit seines Echtlederdekors erreicht wird.

Nachfolgend wird die Erfindung nun anhand bevorzugter Ausführungsbeispiele mit Bezug auf die beigefügten Zeichnungen näher erläutert. Es zeigen:
- Fig.1: einen Ausschnitt eines ersten Ausführungsbeispiels des erfindungsgemäßen Innenausstattungsteils mit einem textilen Abstandsgewirke in einer schematischen Schnittdarstellung;
- Fig.2: den Ausschnitt von Fig.1 in einem in Schubrichtung belasteten Zustand;
- Fig.3: einen anderen, gekrümmten Ausschnitt des Innenausstattungsteils von Fig.1;
- Fig.4: einen Ausschnitt eines zweiten Ausführungsbeispiels des erfindungsgemäßen Innenausstattungsteils mit einem Faservlies in einer schematischen Schnittdarstellung.

In den Figuren werden für gleiche oder sich entsprechende Komponenten die gleichen Bezugszeichen verwendet.

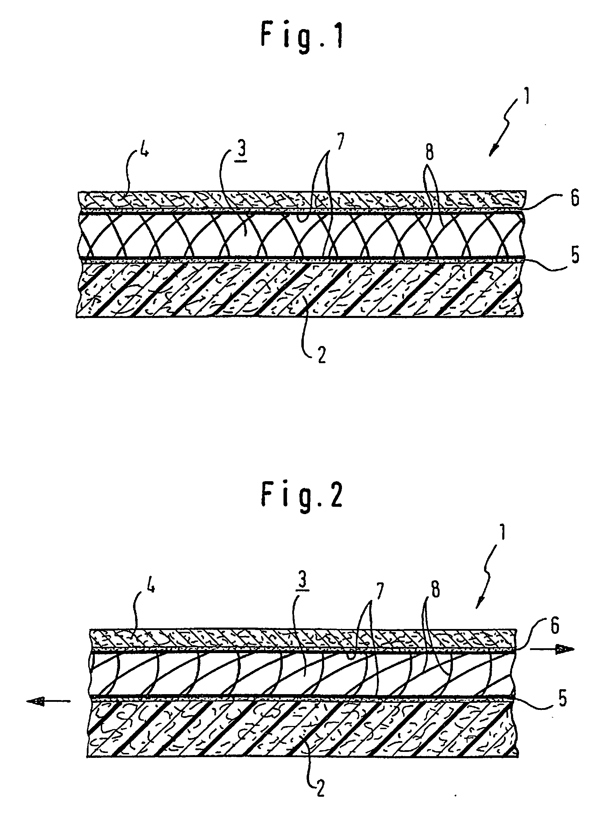

Die Fig. 1-3 zeigen Ausschnitte eines ersten Ausführungsbeispiels eines Innenausstattungsteils 1, beispielsweise einer Instrumententafel eines Kraftfahrzeugs. Das Innenausstattungsteil 1 ist als Schichtverbund aufgebaut. Die Basis bildet ein starres Trägerformteil 2, das z.B. aus einem faserverstärkten Kunstharzwerkstoff gefertigt ist. Auf der Oberfläche des Trägerformteils 2 ist eine Schicht aus einem textilen Abstandsgewirke 3 vorgesehen. Auf der Oberfläche des Abstandsgewirkes 3 wiederum befindet sich eine Schicht aus Echtleder 4, die die Dekorschicht zum Fahrzeuginnenraum hin bildet. Das Trägerformteil 2 ist mit dem Abstandsgewirke 3 mittels einer Kleberschicht 5 verbunden, ebenso ist die Echtlederschicht 4 mit dem Abstandsgewirke mittels einer Kleberschicht 6 verbunden. Das Abstandsgewirke 3 besteht aus zwei voneinander beabstandeten textilen Deckflächen 7, die über ein Fadensystem 8, beispielsweise ein Monofilgarn, miteinander verbunden sind.

Während Fig.1 den Schichtverbund des Innenausstattungsteils 1 in einem unbelasteten Zustand zeigt, veranschaulicht Fig.2 einen Zustand, in dem eine Schublast auf den Schichtverbund einwirkt (siehe Pfeile). Durch die Schublast verschieben sich die beiden textilen Deckflächen 7 des Abstandsgewirkes 3 relativ zueinander. Das Fadensystem 8 erlaubt eine solche Relativverschiebung und sorgt nach dem Wegfall der Belastung wieder für eine Rückstellung in den Ausgangszustand. Ebenso können die textilen Deckflächen 7 in Richtung aufeinander zu, also senkrecht zu den Deckflächenebenen, verschoben werden. Auch hier wirkt die Rückstellelastizität des Fadensystems 8 der Druckbelastung entgegen. Das textile Abstandsgewirke 3 läßt auch eine Mischung aus Schub- und Druckverformung zu, was eine besondere Haptik für das Echtlederdekor ergibt.

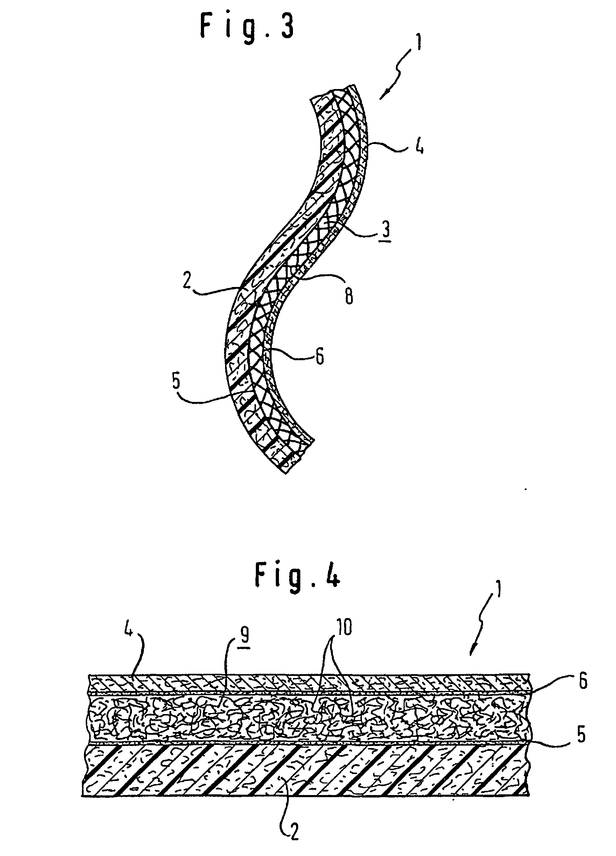

Fig. 3 verdeutlicht, daß auch bei einer - z.B. konkav - gekrümmten Formgebung des Innenausstattungsteils 1 das Abstandsgewirke 3 stets die erforderliche Haftung der Echtlederschicht 4 sicherstellt, da sich das Abstandsgewirke mit seinem Fadensystem 8 dem Krümmumgsverlauf des Innenausstattungsteils anpaßt und insbesondere auftretende Zugbelastungen aufnimmt.

Fig. 4 zeigt den zum ersten Ausführungsbeispiel analogen Schichtverbundaufbau eines zweiten Ausführungsbeispiels mit einer Faservliesschicht 9. Dieses Faservlies besteht aus einer Vielzahl von Fasern 10, die insbesondere Zugbelastungen aufnehmen können.

## Patentansprüche

1. Innenausstattungsteil für Fahrzeuge, insbesondere Kraftfahrzeuge, mit
- einem starren Trägerformteil (2),
- einer auf einer Oberfläche des Trägerformteils (2) angeordneten Schicht aus einem Abstandsgewirke (3)
und
- einer ersten Kleberschicht (5) zwischen Trägerformteil (2) und Abstandsgewirke (3)
**dadurch gekennzeichnet, daß** es
- eine auf dem Abstandsgewirke (3) angeordnete Schicht aus Echtleder (4) sowie
- eine zweite Kleberschicht (6) zwischen Abstandsgewirke (3) und Echtlederschicht (4) aufweist.

2. Innenausstattungsteil nach Anspruch 1, **dadurch gekennzeichnet, daß** das Abstandsgewirke (3) zwei textile Deckflächen (7) aufweist, die durch ein Fadensystem (8) im Abstand voneinander verbunden sind.

3. Innenausstattungsteil für Fahrzeuge, insbesondere Kraftfahrzeuge, mit
- einem starren Trägerformteil (2),
- einer auf einer Oberfläche des Trägerformteils (2) angeordneten Schicht aus einem Faservlies (9) und
- einer ersten Kleberschicht (5) zwischen Trägerformteil (2) und Faservlies (9)
**dadurch gekennzeichnet, daß** es
- eine auf dem Faservlies (9) angeordnete Schicht aus Echtleder (4) sowie
- eine zweite Kleberschicht (6) zwischen Faservlies (9) und Echtlederschicht (4) aufweist.

4. Innenausstattungsteil nach Anspruch 3, **dadurch gekennzeichnet, daß** das Faservlies (9) zwei miteinander vernadelte Faservliesschichten aufweist.

5. Innenausstattungsteil nach einem der Ansprüche 1 bis 4, **dadurch gekennzeichnet, daß** die Schicht aus einem Abstandsgewirke (3) oder Faservlies (9) eine Dicke von 1-6 mm aufweist

6. Innenausstattungsteil nach Anspruch 5, **dadurch gekennzeichnet, daß** die Schicht aus einem Abstandsgewirke (3) oder Faservlies (9) eine Dicke von 2-4 mm aufweist.

7. Innenausstattungsteil nach einem der Ansprüche 1 bis 6, **dadurch gekennzeichnet, daß** die erste Kleberschicht (5) zwischen dem Trägerformteil (2) und dem Abstandsgewirke (3) oder Faservlies (9) aus einem wärmeaktivierbaren Kleber gebildet ist.

8. Innenausstattungsteil nach einem der Ansprüche 1 bis 7, **dadurch gekennzeichnet, daß** die zweite Kleberschicht (6) zwischen dem Echtleder (4) und dem Abstandsgewirke (3) oder Faservlies (9) aus einem Zweikomponenten-Polyurethan-Kleber qebildet ist.

9. Innenausstattungsteil nach einem der Ansprüche 1 bis 7, **dadurch gekennzeichnet, daß** die zweite Kleberschicht (6) zwischen dem Echtleder (4) und dem Abstandsgewirke (3) oder Faservlies (9) aus einem Schmelzkleber gebildet ist.

10. Innenausstattungsteil nach einem der Ansprüche 1 bis 9, **dadurch gekennzeichnet, daß** das Echtleder (4) ein schrumpfoptimiertes Leder ist.

11. Innenausstattungsteil nach einem der Ansprüche 1 bis 10, **dadurch gekennzeichnet, daß** das starre Trägerformteil (2) aus faserverstärktem Polyurethan gebildet ist.

12. Verfahren zur Herstellung von Innenausstattungsteilen gemäß Anspruch 1 bis 11 für Fahrzeuge, insbesondere Kraftfahrzeuge, mit folgenden Schritten:
a) Bilden eines Schichtverbundes durch Verkleben (6) der Rückseite eines Zuschnitts aus Echtleder (4) mit einer Oberfläche eines Flächenzuschnitts aus Abstandsgewirke (3) oder Faservlies (9):
b) Aufkleben des Schichtverbundes (4, 6, 3; 4, 6, 9) auf eine Oberfläche eines separat hergestellten starren Trägerformteils (2).

13. Verfahren nach Anspruch 12, **dadurch gekennzeichnet, daß** das Echtleder (4) vor dem Schritt des Bildens eines Schichtverbundes schrumpfoptimiert wird.

## Claims

1. Interior trim member for vehicles, in particular motor vehicles, with
- a rigid substrate moulding (2),
- a layer consisting of a knitted spacer fabric (3) arranged on a surface of the substrate moulding (2) and
- a first adhesive layer (5) between substrate moulding (2) and knitted spacer fabric (3),
**characterised in that** it comprises
- a layer of genuine leather (4) arranged on the knitted spacer fabric (3) as well as
- a second adhesive layer (6) between knitted spacer fabric (3) and genuine leather layer (4).

2. Interior trim member according to claim 1, **characterised in that** the knitted spacer fabric (3) comprises two textile covering surfaces (7) which are joined at a distance from each other by a thread system (8).

3. Interior trim member for vehicles, in particular motor vehicles, with
- a rigid substrate moulding (2),
- a layer consisting of a non-woven fabric (9) arranged on a surface of the substrate moulding (2) and
- a first adhesive layer (5) between substrate moulding (2) and non-woven fabric (9),
**characterised in that** it comprises
- a layer of genuine leather (4) arranged on the non-woven fabric (9) as well as
- a second adhesive layer (6) between non-woven fabric (9) and genuine leather layer (4).

4. Interior trim member according to claim 3, **characterised in that** the non-woven fabric (9) comprises two non-woven fabric layers joined together by needle punching.

5. Interior trim member according to any of claims 1 to 4, **characterised in that** the layer consisting of a knitted spacer fabric (3) or non-woven fabric (9) has a thickness of 1-6 mm.

6. Interior trim member according to claim 5, **characterised in that** the layer consisting of a knitted spacer fabric (3) or non-woven fabric (9) has a thickness of 2-4 mm.

7. Interior trim member according to any of claims 1 to 6, **characterised in that** the first adhesive layer (5) between the substrate moulding (2) and the knitted spacer fabric (3) or non-woven fabric (9) is formed from a heat-activatable adhesive.

8. Interior trim member according to any of claims 1 to 7, **characterised in that** the second adhesive layer (6) between the genuine leather (4) and the knitted spacer fabric (3) or non-woven fabric (9) is formed from a two-component polyurethane adhesive.

9. Interior trim member according to any of claims 1 to 7, **characterised in that** the second adhesive layer (6) between the genuine leather (4) and the knitted spacer fabric (3) or non-woven fabric (9) is formed from a hot-melt adhesive.

10. Interior trim member according to any of claims 1 to 9, **characterised in that** the genuine leather (4) is a leather with optimised shrinkage.

11. Interior trim member according to any of claims 1 to 10, **characterised in that** the rigid substrate moulding (2) is formed from fibre-reinforced polyurethane.

12. Method for the manufacture of interior trim members according to claims 1 to 11 for vehicles, in particular motor vehicles, with the following steps:
a) forming a layered composite by adhesion (6) of the reverse side of a blank made of genuine leather (4) to a surface of a surface blank made of knitted spacer fabric (3) or non-woven fabric (9);
b) adhesion of the layered composite (4, 6, 3; 4, 6, 9) to a surface of a separately manufactured rigid substrate moulding (2).

13. Method according to claim 12, **characterised in that** the genuine leather (4) is optimised for shrinkage before the step of forming a layered composite.

## Revendications

1. Élément de garnissage intérieur pour véhicules, en particulier pour véhicules automobiles, comportant :
- une partie porteuse conformée rigide (2),
- une couche de tricot d'écartement (3) agencée sur une surface de la partie porteuse conformée (2), et
- une première couche de colle (5) entre la partie porteuse conformée (2) et le tricot d'écartement (3),
**caractérisé en ce qu'**il comprend une couche en cuir véritable (4) agencée sur le tricot d'écartement (3) ainsi qu'une deuxième couche de colle (6) entre le tricot d'écartement (3) et la couche en cuir véritable (4).

2. Élément de garnissage intérieur selon la revendication 1, **caractérisé en ce que** le tricot d'écartement (3) comprend deux surfaces de couverture textiles (7) qui sont reliées à distance l'une à l'autre par un système de fils (8).

3. Élément de garnissage intérieur pour véhicules, en particulier pour véhicules automobiles, comportant :
- une partie porteuse conformée rigide (2),
- une couche de nappe de fibres (9) agencée sur une surface de la partie porteuse conformée (2), et
- une première couche de colle (5) entre la partie porteuse conformée (2) et la nappe de fibres (3),
**caractérisé en ce qu'**il comprend une couche en cuir véritable (4) agencée sur la nappe de fibres (9) ainsi qu'une deuxième couche de colle (6) entre la nappe de fibres (9) et la couche en cuir véritable (4).

4. Élément de garnissage intérieur selon la revendication 3, **caractérisé en ce que** la nappe de fibres (9) comprend deux couches de nappe de fibres aiguilletées l'une sur l'autre.

5. Élément de garnissage intérieur selon l'une quelconque des revendications 1 à 4, **caractérisé en ce que** la couche du tricot d'écartement (3) ou de la nappe de fibres (9) présente une épaisseur de 1 à 6 mm.

6. Élément de garnissage intérieur selon la revendication 5, **caractérisé en ce que** la couche du tricot d'écartement (3) ou de la nappe de fibres (9) présente une épaisseur de 2 à 4 mm.

7. Élément de garnissage intérieur selon l'une quelconque des revendications 1 à 6, **caractérisé en ce que** la première couche de colle (5) entre la partie porteuse conformée (2) et le tricot d'écartement (3) ou la nappe de fibres (9) est formée par une colle susceptible d'être activée à la chaleur.

8. Élément de garnissage intérieur selon l'une quelconque des revendications 1 à 7, **caractérisé en ce que** la deuxième couche de colle (6) entre le cuir véritable (4) et le tricot d'écartement (3) ou la nappe de fibres (9) est formée par une colle polyuréthanne à deux composantes.

9. Élément de garnissage intérieur selon l'une quelconque des revendications 1 à 7, **caractérisé en ce que** la deuxième couche de colle (6) entre le cuir véritable (4) et le tricot d'écartement (3) ou la nappe de fibres (9) est formée par une colle fusible.

10. Élément de garnissage intérieur selon l'une quelconque des revendications 1 à 9, **caractérisé en ce que** le cuir véritable (4) est un cuir optimisé vis-à-vis de la rétraction.

11. Élément de garnissage intérieur selon l'une quelconque des revendications 1 à 10, **caractérisé en ce que** la partie porteuse conformée rigide (2) est formée en polyuréthanne renforcé par des fibres.

12. Procédé de fabrication d'éléments de garnissage intérieurs, selon les revendications 1 à 11, pour véhicules, en particulier pour véhicules automobiles, comprenant les étapes suivantes :
a) on forme un composite de couches par collage (6) de la face arrière d'un flan en cuir véritable (4) avec une surface d'un flan plat d'un tricot d'écartement (3) ou de nappe de fibres (9),
b) on colle le composite de couches (4, 6, 3 ; 4, 6, 9) sur une surface d'une partie porteuse conformée rigide (2) réalisée séparément.

13. Procédé selon la revendication 12, **caractérisé en ce que** l'on optimise le cuir véritable (4) vis-à-vis de la rétraction avant l'étape de la formation du composite de couches.
